(19)

Europäisches
Patentamt
European
Patent Office
Office européen
des brevets

(11) **EP 1 933 021 A2**

(12) **EUROPEAN PATENT APPLICATION**

(43) Date of publication:
**18.06.2008 Bulletin 2008/25**

(51) Int Cl.:
**F02D 41/40** *(2006.01)*

(21) Application number: **07122932.2**

(22) Date of filing: **11.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **13.12.2006 JP 2006335652**

(71) Applicant: **Toyota Jidosha Kabushiki Kaisha Toyota-shi, Aichi-ken 471-8571 (JP)**

(72) Inventor: **Shirai, Akira TOYOTA-SHI, AICHI-KEN 471-8571 (JP)**

(74) Representative: **Intes, Didier Gérard André et al Cabinet Beau de Loménie
158, rue de l'Université
75340 Paris Cedex 07 (FR)**

(54) **Fuel injection control apparatus for diesel engine**

(57)   A fuel injection control apparatus for a diesel engine including a fuel injection valve having a piezo element as an actuator. The apparatus is characterized in that the apparatus includes means for detecting operating condition of the engine; means for detecting accelerator operation amount (ACCP); means for setting the number of pilot injections per one fuel injection from the fuel injection valve, based on the operating condition of the engine detected by the means for detecting operating condition of the engine; and means for prohibiting changing the number of pilot injections by the means for setting the number of pilot injections when the accelerator operation amount (ACCP) detected by the means for detecting accelerator operation amount is constant.

**Fig.5**

**Description**

FIELD OF THE INVENTION

The present invention relates to a fuel injection control apparatus for a diesel engine including a fuel injection valve (a piezo injector) having a piezo element as an actuator.

BACKGROUND

To improve combustion characteristics of diesel engines, there is known a fuel injection control technique in which pilot injection is performed prior to the main injection, as described in Japanese Laid-Open Patent Publications 200-352326, 10-274087, and 62-17343. The publications 2000-352326 and 62-17343 are particularly directed to reducing noise by pilot injection.

In such fuel injection control, it has also been proposed that a highly responsive piezo injector be used to make the number of pilot injections per each fuel injection not just one but also not less than two so as to improve the combustion characteristics and reduce noise further. For example, see Japanese Laid-Open Patent Publication 2006-144588. The piezo injector uses one or more piezo elements as an actuator(s) and, due to its construction, tends to generate larger operational noise compared to a fuel injection valve using an electromagnetic solenoid. In the publication 2006-144588, noise is reduced by charge control of the piezo element.

During idling, especially during idling when the engine is cold, in order to enhance combustion stability, performance of a plurality of pilot injections (e.g., two injections) per one fuel injection has been studied. However, in a piezo injector performing a plurality of pilot injections, the number of operations is increased due to the greater number of pilot injections, which generates more noise. To reduce such noise, reduction in the number of pilot injections during idling after the engine is warmed-up has been proposed.

However, changing the number of pilot injections causes a change in mechanical noise (operational noise of the injector) and a change in combustion characteristics of the diesel engine. Accordingly, when the condition of the engine changes from a cold condition to a warmed-up condition during idling, shock associated with the change as described above occurs abruptly. The driver of the vehicle having such a diesel engine feels it and becomes uncomfortable.

SUMMARY

An object of the present invention to alleviate the discomfort of the driver when the shock associated with the change in the number of pilot injections occurs.

According to an aspect of the invention, a fuel injection control apparatus for a diesel engine including a fuel injection valve having a piezo element as an actuator is provided. The apparatus is characterized in that the apparatus includes means for detecting operating condition of the engine; means for detecting accelerator operation amount; means for setting the number of pilot injections per one fuel injection from the fuel injection valve, based on the operating condition of the engine detected by the means for detecting operating condition of the engine; and means for prohibiting changing the number of pilot injections by the means for setting the number of pilot injections when the accelerator operation amount detected by the means for detecting accelerator operation amount is constant.

BRIEF DESCRIPTION OF THE DRAWINGS

Fig. 1 is a block diagram illustrating a fuel injection apparatus of a vehicle diesel engine and a control apparatus thereof according to a first embodiment;
Fig. 2 is a flow chart of a processing for setting the number of pilot injections performed by the ECU according to the first embodiment;
Fig. 3 is a graph illustrating a region of a map for normal mode MAPnr that is used in the setting processing of Fig. 2;
Fig. 4 is a graph illustrating a region of a map for idle mode MAPid that is used for the setting processing of Fig. 2;
Fig. 5 is a flow chart of a processing for selecting a pilot injection mode performed by the ECU according to the first embodiment;
Fig. 6 is a timing chart illustrating an example of processing from a cold condition to a warmed-up condition;
Fig. 7 is a timing chart illustrating an example of processing after completion of warm-up according to the first embodiment;
Fig. 8 is a flow chart of a processing for setting the number of pilot injections according to a second embodiment; and

Fig. 9 is a flow chart of processing for setting a single pilot injection mode according to the second embodiment.

DESCRIPTION OF EXEMPLARY EMBODIMENTS

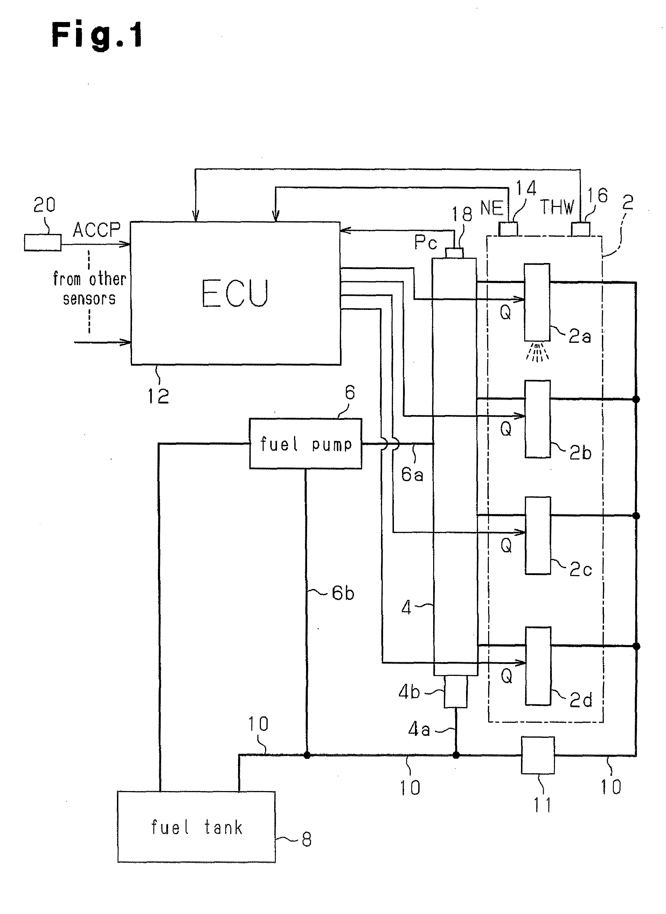

Fig. 1 is a block diagram illustrating a fuel injection apparatus of a vehicle diesel engine (internal combustion engine) and a control apparatus thereof according to a first embodiment. In Fig. 1, the fuel injection apparatus is a common rail type fuel injection apparatus in a four-cylinder diesel engine 2. However, the engine may have cylinders other than four and the fuel injection apparatus may be a common rail type apparatus including different hardware.

In Fig. 1, fuel injection valves 2a, 2b, 2 c , 2d, each of which is provided corresponding to one of the cylinders of the diesel engine 2, are supplied with high-pressure fuel from a common rail 4. The fuel is pumped from a fuel tank 8 with a fuel pump 6 driven by the engine 2 to the common rail 4 in a high-pressure state. The common rail 4 is an accumulator vessel adapted to accumulate high pressure fuel and connected to the discharge port of the fuel pump 6 that pumps high-pressure fuel to the common rail 4 via a fuel pipe 6a. Among the high-pressure fuel generated in the fuel pump 6, excess fuel other than the fuel supplied to the fuel pipe 6a for adjusting rail pressure Pc is discharged from a fuel return pipe 6b with a pump control valve mounted in the fuel pump 6 to a leakage pipe 10 and returned to the fuel tank 8. A relief pipe 4a returns the fuel from the common rail 4 to the fuel tank 8 and a pressure limiter 4b, which serves as a pressure safety valve, is attached to the relief pipe 4a. When fuel pressure in the common rail 4 exceeds a predetermined limit value, the pressure limiter 4b opens so as to decrease the fuel pressure below the predetermined limit value. Fuel leakage from the fuel injection valves 2a-2d is discharged to the leakage pipe 10 and returned to the fuel tank 8 and a check valve 11 is disposed in the leakage pipe 10 for keeping pressure of the fuel injection valves 2a-2d on the leakage side constant.

The fuel injection valves 2a-2d are piezo injectors having piezo elements as actuators and inject fuel to the respective cylinders. The fuel injection valves 2a-2d are driven so that high-pressure fuel accumulated in the common rail 4 is injected to the respective cylinders at the calculated fuel injection timing.

An electronic control unit (ECU) 12 is a microcomputer including a CPU that performs various control operations; storage devices or memories such as ROM and RAM that store programs and data for the control operations; an input and output circuit; power supply circuit, and a drive circuit such as an injector drive circuit. The ECU 12 reads out the signals transmitted from different sensors and performs various operations based on the signals.

The sensors connected to the ECU 12 include an engine speed sensor 14, a cooling water temperature sensor 16, a rail pressure sensor 18, as illustrated in Fig. 1. In addition, the ECU 12 also reads out the signals from the sensors including an accelerator operation amount sensor 20 that detects accelerator operation amount ACCP (%) by a vehicle driver. The engine speed sensor 14 detects rotation speed, or the number of revolution, of a crank shaft of the engine 2 as the engine speed NE (rpm). The cooling water temperature sensor 16 detects the temperature of cooling water THW as the engine temperature. The rail pressure sensor 18 detects the rail pressure Pc, which is fuel pressure in the common rail 4. The accelerator operation amount sensor 20 detects the operation amount of the accelerator pedal operated by the driver in percentage on condition that the maximum amount is 100%.

The ECU 12 determines the fuel injection amount and injection timing at a current operating condition of the engine based on the programs stored in the ROM for each fuel injection timing and data and operation read out by the ROM. Then, the ECU 12 injects fuels from the fuel injection valves 2a-2d at the injection timing. Moreover, in order to keep the combustion state appropriate in accordance with the operating condition of the engine, the ECU 12 performs pilot injection, which is performed as a part of fuel injection once or twice.

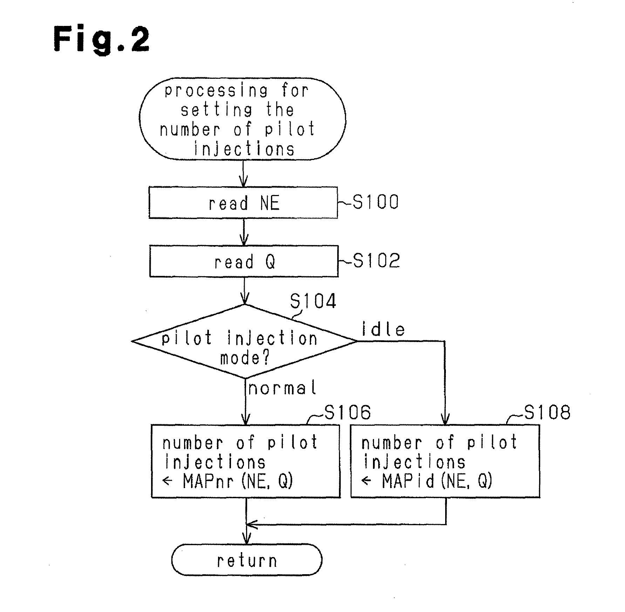

Referring to a flow chart of Fig. 2, processing is described for setting the number of pilot injections per one fuel injection in the fuel injection control as performed by the ECU 12. This processing is performed in an interrupt manner at predetermined crank angle intervals. Each step in the flow chart corresponding to each process step is represented by "S".

With reference to Fig. 2, the processing for setting the number of pilot injections is described. When the processing starts, the engine speed NE detected by the engine speed sensor 14 is first read into working memory of the ECU 12 (S100). Next, the fuel injection amount Q, which is calculated in the processing for calculating the fuel injection amount in the ECU12, is read into the working memory (S102).

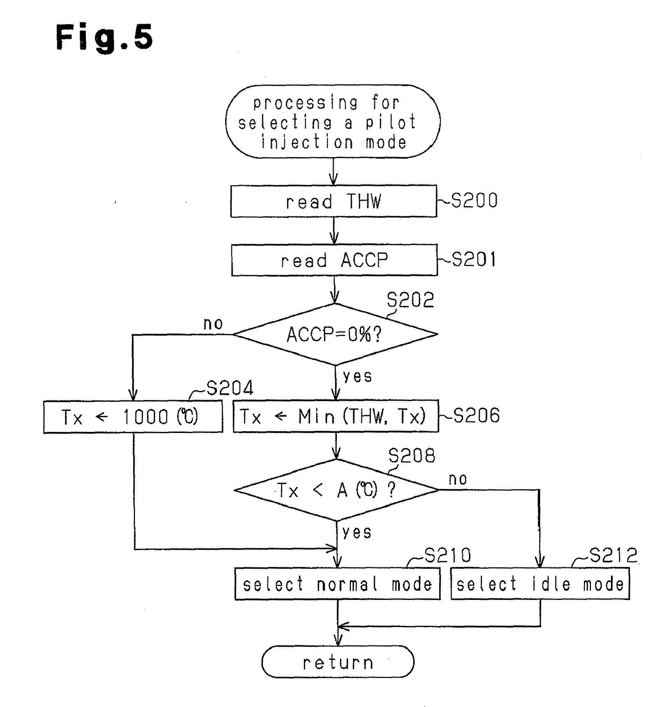

Next, it is determined whether a pilot injection mode or a normal mode is set (S104). This mode is the mode selected in the processing for selecting a pilot injection mode (Fig. 5), as described below.

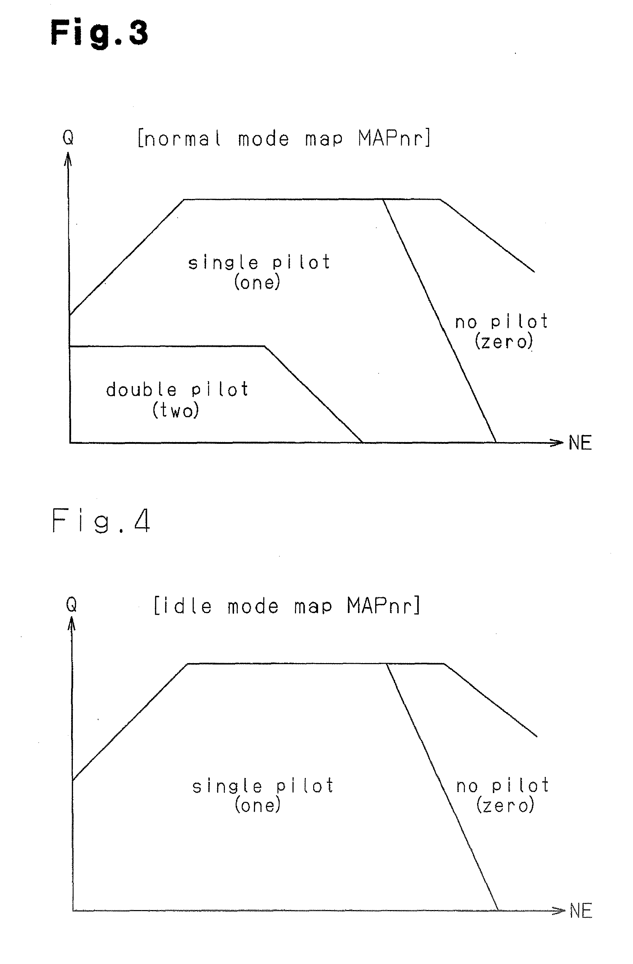

When it is determined that the normal mode is set in step S104, the number of pilot injections Npt is set based on the engine speed NE and the fuel injection amount Q using a normal mode map MAPnr of Fig. 3 (S106). Meanwhile, when it is determined that the idle mode is set in step S104, the number of pilot injections Npt is set based on the engine speed NE and the fuel injection amount Q using an idle mode map MAPid of Fig. 4 (S108).

In the normal mode map MAPnr of Fig. 3, the number of pilot injections per one fuel injection is set twice in a region where the engine speed NE is low and the fuel injection amount Q is small (double pilot). The number of pilot injections per one fuel injection is set once in a region where the engine speed NE is higher and the fuel injection amount Q is greater (single pilot). In a region where the engine speed NE is much higher, the number of pilot injections is zero, i.e., the "no pilot" injection is executed.

The idle mode map MAPid of Fig. 4 is different from the normal mode map MAPnr in that the region of the double pilot is replaced by the region of the single pilot. Accordingly, all the regions other than that where no pilot injection is executed at the much higher engine speed are single pilot regions.

Thus, the number of pilot injections Npt is set based on the map MAPnr or MAPid selected in each mode. Then, fuel injection amount Q is divided into the pilot injection and the main injection by the fuel injection control performed by the ECU 12 so that these injections are conducted from injection valves 2a-2d into the combustion chamber at respective timings.

Referring to Fig. 5, processing for selecting a pilot injection mode is described. This processing is performed in an interrupt manner at predetermined crank angle intervals.

When the processing starts, the cooling water temperature THW of the engine 2 detected by the cooling water temperature sensor 16 is first read into the working memory (S200). Next, the accelerator operation amount ACCP detected by the accelerator operation amount sensor 20 is read into the working memory (S201). Then, it is determined whether the amount ACCP is 0% or not (S202). If ACCP is 0%, i.e., the accelerator pedal is not depressed at all (yes in step S202), water temperature for mode decision Tx is determined as expressed by Formula 1 (S206).

$$\text{Formula 1} \quad Tx \leftarrow \text{Min (THW, Tx)}$$

wherein Min() represents an operator extracting the minimum value from the values in parentheses. In other words, Formula 1 indicates that smaller of the value of the cooling water temperature THW and the value of the preset water temperature for mode determination Tx is set as a new water temperature for mode determination Tx. The initial value of the water temperature for mode determination Tx is set to an extremely large value that the actual cooling water temperature THW can not reach when the ignition switch is on. For example, the initial value is set 1000 degrees C.

Accordingly, if the water temperature for mode determination Tx is the initial value, in step S206, an actual value of the cooling water temperature THW (< 1000 degree C) is set as the water temperature for mode determination Tx.

Next, whether the value of the water temperature for mode determination Tx is lower than the value of reference temperature for mode decision A or not is determined (S208). The reference temperature for mode decision A is a reference temperature for determining whether the engine is cold or not during the pilot injection. For example, the reference temperature is set to a temperature within the scope of 40-50 degrees C.

If the engine is cold (Tx < A), i.e., yes in step S208, normal mode (corresponding to the map MAPnr of Fig. 3) is selected (S210). If the engine is warmed up (Tx ≥ A), i.e., no in step S208, idle mode (corresponding to the map MAPid of Fig. 4) is selected (S212). By selecting either mode, the decision step S104 of the setting processing of Fig. 2 is performed so that either map MAPnr or MAPid is selected to set the number of pilot injections.

Returning to Fig. 5, while the accelerator operation amount ACCP of 0% continues (yes in S202), the actual value of the cooling water temperature THW is set as the water temperature for mode determination Tx in step S206 at first and, after that, a lower value is kept extracted even when the actual value of the cooling water temperature THW is increased. Thus, even if the step S206 proceeds, the value of the water temperature for mode determination Tx is the first-set value of the cooling water temperature THW that and not associated with the actual value of the cooling water temperature THW. If the engine 2 is started in cold condition, the value of the water temperature for mode determination Tx remains lower than that of the reference temperature for mode decision A (yes in step S208). In other words, even if the actual value of the cooling water temperature THW exceeds that of the reference temperature A, so long as ACCP of 0% continues, the normal mode is selected in step S210 but the idle mode is never selected.

Thereafter, when the driver depresses the accelerator pedal and the accelerator operation amount is changed to ACCP > 0% (no in step S202), the water temperature for mode determination Tx is set to an extremely large value that the actual cooling water temperature THW can not reach, here set to 1000 degrees C which is the same as the initial value (S204). Then the normal mode is selected (S210) and exits.

So long as ACCP > 0% continues (no in step S202), steps S204 and S210 are performed and Tx remains 1000 degrees C and normal mode continues. Then, when the driver gets back the accelerator pedal completely, ACCP becomes 0% (yes in step S202) and the processing of Formula 1 is performed (S206). In the first processing after ACCP > 0% is returned to ACCP = 0%, Tx is set 1000 degree C. Therefore, according to the Formula 1, a value of the update cooling water temperature THW is set as the new water temperature for mode determination Tx.

Accordingly, in step S208, the determination step of the water temperature for mode determination Tx using the reference temperature A is performed by the value of the update cooling water temperature Tx. If the actual value of the cooling water temperature Tx is equal to or more than the reference temperature A, which means Tx ≥ A ( no in step S208, the idle mode is selected (S212). In other words, the normal mode is switched to the idle mode at the timing of when the driver completely releases the accelerator pedal.

When ACCP > 0% is changed to ACCP = 0%, if the actual value of the cooling water temperature THW is lower than that of the reference temperature for mode decision A, which means Tx < A (yes in S208), the normal mode further continues (S210). In this case, even if ACCP of 0% continues (yes in step S202) and the actual value of the cooling water temperature THW is increased to equal or more than the reference temperature A, the normal mode yet continues (S210), since the value of the water temperature Tx calculated from the Formula 1 is kept lower than the reference temperature A (yes in step S208).

Again, if THW is equal to or greater than A (THW ≥ A) at timing when the accelerator operation amount is changed from ACCP > 0% to ACCP = 0%, then Tx ≥ A (no in step S208). Then the operation mode is changed to the idle mode (S212). In other words, the normal mode is switched to the idle mode at the timing of when the driver completely releases the accelerator pedal.

After the operation mode is changed to the idle mode, when the accelerator operation amount ACCP is greater than 0% (ACCP > 0, no in step S202) the normal mode is selected (S210) and maintained during the period the accelerator operation amount ACCP > 0% is satisfied. In other words, the operation mode is switched from the idle mode to the normal mode at the timing of when the driver completely releases the accelerator pedal. The switching of the pilot injection mode occurs at the timing of the accelerator operation by the driver and never occurs at the other timings.

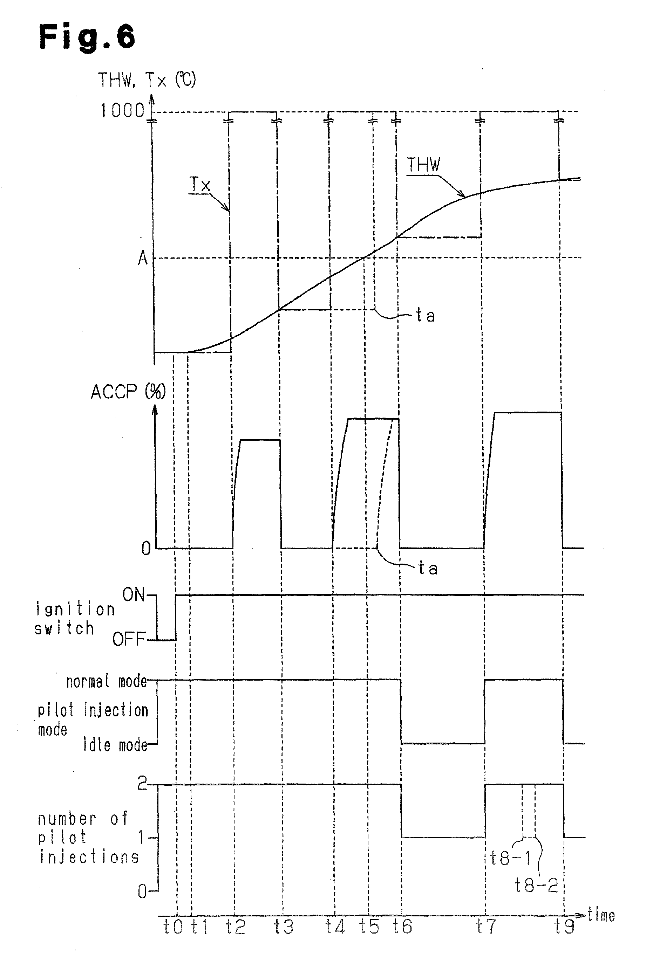

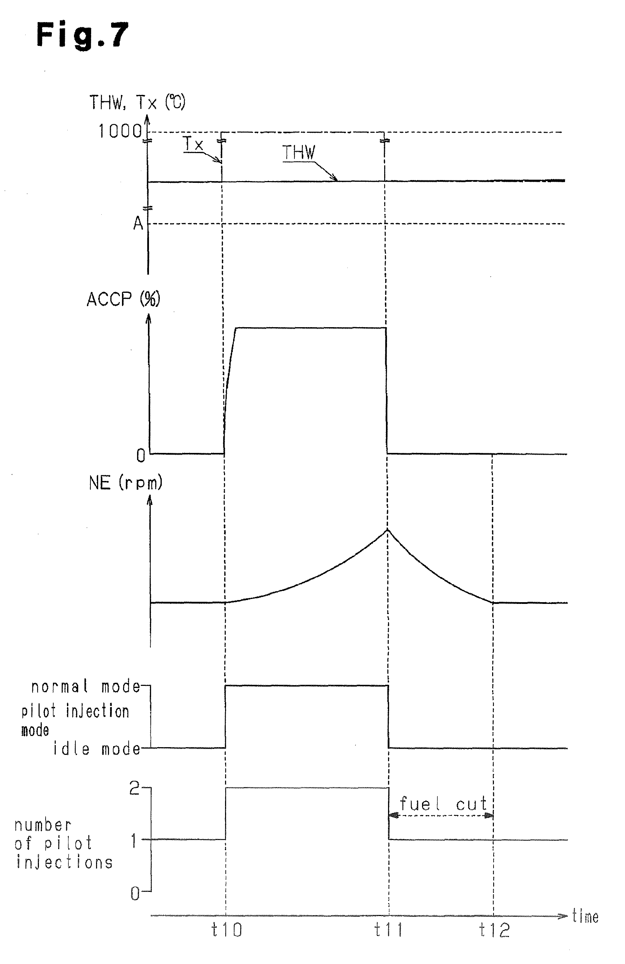

Figs. 6 and 7 illustrate timing charts illustrating an example of control according to the first embodiment. In Fig. 6, since the accelerator operation amount ACCP is 0% when an ignition switch is turned on (t0), the actual value of cooling water temperature THW at time t0 is set as the water temperature for mode determination Tx (S206). The cooling water temperature THW is less than A (THW < A), the normal mode is selected (S210).

When the engine 2 starts, the cooling water temperature THW (solid line) gradually increases but ACCP is maintained at 0% (ACCP = 0%, yes in step S202), the water temperature for mode determination Tx (chain line) does not change and the normal mode continues (t1). Then, when the accelerator pedal is depressed and ACCP becomes greater than 0% (ACCP > 0%, no in the S202), Tx is set 1000 degree C (S204) but the normal mode is maintained (S210: t2).

When ACCP is returned to 0% at time t3 (ACCP = 0%, yes in step S202), the value of cooling water temperature THW at time t3 is set as the water temperature Tx (S206), however, the normal mode continues (S210: t3) since THW is still lower than A (THW < A).

Next, during the period when the accelerator pedal is depressed (times t4-t6), the value of the cooling water temperature THW reaches that of the reference temperature for mode decision A (at time t5). However, ACCP remains greater than 0% (ACCP > 0%, no in step S202) and Tx is 1000 degree C (S204), the normal mode continues (S210: t4-t6).

At time t6, when ACCP is returned to 0% by the accelerator operation by the driver (ACCP=0%, yes in step S202), the actual temperature of the cooling water temperature THW ( ≥ A) at time t6 is set as the water temperature for mode determination (step 206 and no in step S208) and then idle mode is selected (S212: t6). In other words, the operation mode is switched from the normal mode (double pilot) to the idle mode (single pilot) at the timing of when the driver operates the accelerator pedal.

After that, THW exceeds A (THW > A). Thus, the operation mode is the idle mode (t6-t7, t9) while ACCP is 0% (ACCP = 0%) and the normal mode (t7-t9) while the period when ACCP is greater than 0% (ACCP > 0%). That is, the operation mode is switched from the normal mode (double pilot) to the idle mode (single pilot) at the timing of when the driver operates the accelerator pedal.

Provided that ACCP remains 0% (ACCP = 0%) until the actual value of the cooling water temperature THW exceeds the value of the reference temperature for mode decision A, as illustrated by a dashed line in Fig. 6 (during time t3-t6), the value of the water temperature for mode determination Tx is kept lower than A (Tx < A) based on calculation with Formula 1. Thus, the operational mode is not switched from the normal mode (double pilot) to the idle mode (single pilot) at time t 5. Again, in this case, the normal mode is switched to the idle mode at time 6 when ACCP is returned from the value greater than 0% (ACCP > 0%) to zero (ACCP = 0%).

In the timing chart of Fig. 6, double pilot injection is conducted in the normal mode. However, as illustrated in the normal mode map MAPnr (Fig. 3), single pilot (t8 - 1, t8-2, dashed line) may be conducted instead, depending on the operation state of the engine 2.

Fig. 7 illustrates an example of control after the engine is warmed-up (THW ≥ A). The times t10-t11 have already been explained with respect to times t7-t9 in Fig. 6. At time t11, the accelerator pedal is released to perform fuel cut control. The period (t11-t12) is a period during which the single pilot injection in the idle mode should be performed. However, the fuel cut control is performed in that period (t11-t12) and then the single pilot is actually accomplished (t12).

In the above configuration, the engine speed sensor 14 and the cooling water temperature sensor 16 corresponds to a means for detecting the operating condition of the engine. The accelerator operation amount sensor 20 corresponds to a means for detecting accelerator operation amount. Among the processing that the ECU 12 performs, processing for setting the number of pilot injections (Fig. 2) and the steps S208, S210, and S212 of the processing for selecting a pilot injection mode (Fig. 5) correspond to a means for setting the number of pilot injections. The steps S202, S204, and S206 of the processing for selecting a pilot injection mode (Fig. 5) correspond to a means for prohibiting changing the number of pilot injections.

The first embodiment as described above has the following advantages.

When the accelerator operation amount is constant, or ACCP is 0% herein, changing the number of pilot injections is prohibited, even if such changing is attempted to be done after the cooling water temperature THW is increased in steps S208, S210, and S212. In other words, even if the diesel engine 2 is warmed-up, so long as ACCP is 0%, the water temperature for mode determination Tx is set low in step S206 (yes in step S208). Thus, the number of pilot injections is not changed from two (normal mode: S210) to one (idle mode: S212).

The number of pilot injections does not change while the driver of the vehicle having such an engine 2 is not operating the accelerator. Accordingly, a shock associated with the change in mechanical noise (operational noise of the injectors) and change in combustion characteristics does not occur abruptly and the driver is not subjected to an uncomfortable feeling. In particular, the change in the number of pilot injections is prevented during idling where ACCP is 0%. Thus, an uncomfortable feeling that tends to occur due to the change in the number of pilot injections during idling is prevented effectively.

If the driver depresses the accelerator pedal and ACCP becomes greater than 0% (no in step S202), water temperature for mode determination Tx is set to the extremely high temperature (S204). Then, at the timing of when the accelerator operation amount returns to the original amount by operation of the driver, here ACCP of 0%, the number of pilot injections may be changed from two to one.

The mode selected after the engine warm-up differs between ACCP of 0% or ACCP greater than 0%. Thus, at the timing when ACCP becomes greater than 0% by driver's depression of the accelerator pedal, the number of pilot injections may be changed from one to two.

Even if the number of pilot injections is changed in either case, the timing at which the change occurs is the timing at which the driver consciously operates the accelerator. Accordingly, the driver does not feel uncomfortable even when a shock associated with the change in the number of pilot injections occurs.

There is a region of the injection number of 0 in each of the maps MAPnr and MAPid but the change in the number of pilot injections is prohibited substantially between the injection number one and two. Accordingly, uncomfortable feeling in the driver is prevented effectively even when a shock associated with the change in the number of pilot injections occurs.

In the normal mode, the number of pilot injections per one fuel injection is set two in the region where the engine speed NE is low and the fuel injection amount Q is small in the normal mode map MAPnr. The number of pilot injections per one fuel injection is set one in a region where the engine speed NE is higher and the fuel injection amount Q is greater. In addition, at the timing when the change in the number of pilot injections is not prohibited, the number of pilot injections is changed from two to one by switching the maps between the map MAPnr and the map MAPid as the cooling water temperature THW increases.

Therefore, stable combustion in the diesel engine 2 is achieved and operational noise from the fuel injection valves 2a-2d, serving as common rail type piezo injectors, may be reduced.

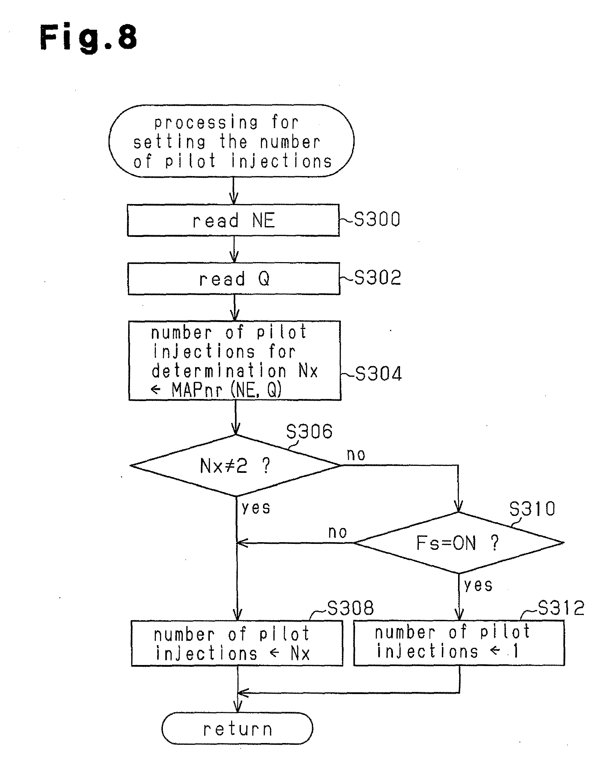

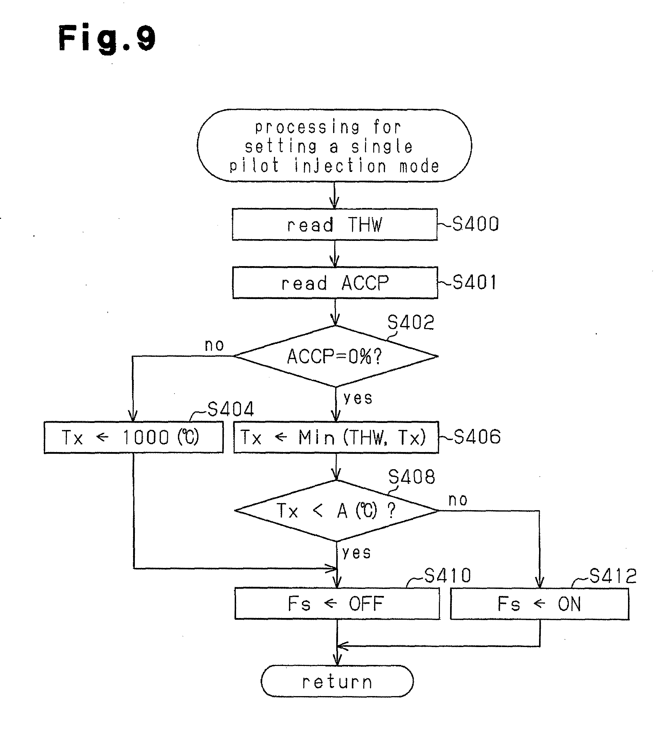

A second preferred embodiment is described as follows. The second embodiment is different from the first embodiment in that the processings illustrated in the flow charts of Figs. 8 and 9 is performed in an interrupt manner at predetermined crank angle intervals, instead of the processing for setting the number of pilot injections (Fig. 2) and the processing for selecting a pilot injection mode (Fig. 5). In addition, the map for setting the number of pilot injections is the normal mode map MAPnr illustrated in Fig. 3 only and the idle mode map MAPid is not used. The other elements are the same as those of the first embodiment normal mode map MAPnr and the description is made with reference to Figs. 1 and 3.

Referring to Fig. 8, processing for setting the number of pilot injections is described. When the processing starts, the engine speed NE detected by the engine speed sensor 14 is first read into a working memory (S300) and the fuel injection amount Q is read into the working memory (S302). These steps are the same as the steps S100 and S102 in Fig. 2.

Next, the number of pilot injections for determination Nx is set based on the engine speed NE and the fuel injection amount Q using a normal mode map MAPnr of Fig. 3 (S304). Then, whether the number Nx is 2 or not is determined (S306). If the number Nx is 1 or 0 (yes in step S306), the number Nx calculated from the normal mode map MAPnr in step S304 is set as the number of pilot injections Npt (S308).

If Nx is 2 (no in step S306), then it is determined (S310) whether a flag Fs is not activated for setting a single pilot injection mode that is set in the following processing for activating the single pilot injection mode in Fig. 9. If Fs is OFF (no in step S310), as described above, the number Nx calculated from the normal mode map MAPnr in step S304 is set as the number of pilot injections Npt (S308). In this case, since Nx is 2, the number Npt is set 2.

If Fs is ON (yes in S310), the number Npt is set to 1. In other words, the number Npt is set to 1 or 2 depending on the status of Fs, i.e., whether it is ON or OFF.

Referring to Fig. 9, the processing for setting a single pilot injection mode is described. This processing is different from the processing of Fig. 5 in that the steps S210 and S212 have been replaced by the steps S410 and S420. That is, the steps S400-408 of Fig. 9 are the same as the steps S200-208 of Fig. 5. Accordingly, when the accelerator operation amount ACCP is greater than 0% (no in step S402) and the water temperature for mode determination Tx is set 1000 degree C (S404) or when the water temperature Tx is lower than A (yes in step S408), the flag Fs is set OFF (S410) . If the water temperature Tx is equal to or greater than A (no in step S408), the flag Fs is set ON (S412).

Thus, as illustrated in timing charts of Figs. 6 and 7, the processings similar to the processing for setting the number of pilot injections (Fig. 2) and the processing for selecting a pilot injection mode (Fig. 5) according to the first embodiment are performed.

In the above construction, the engine speed sensor 14 and the cooling water temperature sensor 16 correspond to means for detecting operating condition of the engine. The accelerator operation amount sensor 20 corresponds to a means for detecting accelerator operation amount. Among the processing ECU 12 performs, the processing for setting the number of pilot injections (Fig. 8) and the steps S408, S410, S412 of the processing for setting a single pilot injection mode (Fig. 9) correspond to a means for setting the number of pilot injections. The steps S402, S404, and S406 of the processing for setting a single pilot injection mode (Fig. 9) correspond to a means for prohibiting changing the number of pilot injections.

The second embodiment as described above has the following advantage.

In addition to the advantages of the first embodiment, the second embodiment eliminates the need for the idle mode map MAPid, which reduces memory in the ECU 12.

It should be apparent to those skilled in the art that the present invention may be embodied in many other specific forms without departing from the spirit or scope of the invention. Particularly, it should be understood that the invention may be embodied in the following forms.

The first and second the embodiment, instead of the cooling water temperature THW, the temperature of engine oil may be used as an engine temperature.

**Claims**

1. A fuel injection control apparatus for a diesel engine (2) including a fuel injection valve (2a-2d) having a piezo element as an actuator, **characterized in that** the apparatus includes

   means (14,16) for detecting operating condition of the engine;

   means (20) for detecting accelerator operation amount (ACCP);

   means (12) for setting the number of pilot injections per one fuel injection (Npt) from the fuel injection valve (2a-2d), based on the operating condition of the engine detected by the means (14,16) for detecting operating condition of the engine; and

   means (12) for prohibiting changing the number of pilot injections (Npt) by the means (12) for setting the number of pilot injections when the accelerator operation amount (ACCP) detected by the means (20) for detecting accelerator operation amount is constant.

2. The apparatus of claim 1, **characterized in that** the means (12) for prohibiting changing the number of pilot injections prohibits the change in the number of pilot injections (Npt) only when the accelerator operation amount (ACCP) remains 0%.

3. The apparatus of claim 1 or 2, **characterized in that** the means for prohibiting changing the number of pilot injections (12) prohibits the change in the number of pilot injections (Npt) only between one and two.

4. The apparatus of any one of claims 1 to 3, **characterized in that** the means (14,16) for detecting operating condition of the engine detect an engine speed (NE) and the means (12) for setting the number of pilot injections sets the number of pilot injections (Npt) based on the engine speed (NE) and a fuel injection amount (Q).

5. The apparatus of claim 4, **characterized in that** the means (14,16) for detecting operating condition of the engine detects the engine speed (NE) and an engine temperature, wherein the means (12) for setting the number of pilot injections sets the number of pilot injection (Npt) to two in a region where the engine speed (NE) is low and the fuel injection amount (Q) is small and the number of pilot injection (Npt) to one in a region where the engine speed (NE) is higher and the fuel injection amount (Q) is greater, wherein the means (12) for setting the number of pilot injections changes the region where the number of pilot injection (Npt) is two to the region where the number of pilot injection (Npt) is one when the engine temperature is higher than a reference temperature (A) and does not changes the regions when the means (12) for prohibiting changing the number of pilot injections prohibits the change in the number of pilot injections (Npt).

6. The apparatus of any one of claims 1 to 3, **characterized in that** the means (14,16) for detecting operating condition of the engine detects an engine speed (NE) and an engine temperature, wherein the means (12) for setting the number of pilot injections sets the number of pilot injections per one fuel injection (Npt) based on the engine speed (NE) and the fuel injection amount (Q) and changes the number of pilot injections (Npt) based on the engine temperature.

7. The apparatus of claim 6, **characterized in that** means (12) for prohibiting changing the number of pilot injections prohibits the change in the number of pilot injections per one fuel injection (Npt) only when the engine temperature increases.

8. The apparatus of claim 6 or 7, **characterized in that** the means (12) for setting the number of pilot injections reduces the number of pilot injections (Npt) when the engine temperature is higher.

9. The apparatus of any one of claims 5 to 8, **characterized in that** the means (14,16) for detecting operating condition of the engine detects an engine cooling water temperature (THW) or an engine oil temperature as the engine temperature.

10. The apparatus of any one of claims 1 to 9, **characterized in that** the fuel injection valve (2a-2d) is a fuel injection valve of a common rail type fuel injection apparatus.

# Fig.1

# Fig.2

```
processing for
setting the
number of pilot
injections
        │
        ▼
   read NE          ─S100
        │
        ▼
   read Q           ─S102
        │
        ▼           S104
   pilot injection  ──── idle ────┐
       mode?                      │
        │                         │
     normal                       │
        │                         │
     ─S106                     ─S108
number of pilot          number of pilot
injections               injections
← MAPnr (NE, Q)          ← MAPid (NE, Q)
        │                         │
        ▼─────────────────────────┘
     return
```

# Fig.3

[normal mode map MAPnr]

Q

single pilot
(one)

double pilot
(two)

no pilot
(zero)

NE

# Fig.4

[idle mode map MAPnr]

Q

single pilot
(one)

no pilot
(zero)

NE

# Fig.5

```
        ╭─────────────────────╮
        │   processing for    │
        │ selecting a pilot   │
        │  injection mode     │
        ╰─────────────────────╯
                  │
                  ▼
        ┌─────────────────────┐
        │      read THW       │──S200
        └─────────────────────┘
                  │
                  ▼
        ┌─────────────────────┐
        │      read ACCP      │──S201
        └─────────────────────┘
                  │                    S202
                  ▼
   no      ◇───────────────◇
  ◄────────│   ACCP=0%?     │
           ◇───────────────◇
  │                 │ yes
  │  S204           ▼
  ▼  ┌──────────────┬──────────────────────┐
 ┌────────────────┐ │ Tx ← Min (THW, Tx)  │──S206
 │ Tx ← 1000 (℃) │ └──────────────────────┘
 └────────────────┘          │      S208
  │                          ▼
  │                ◇───────────────◇   no
  │                │  Tx < A (℃) ?  │──────────┐
  │                ◇───────────────◇          │
  │                       │ yes                │
  └──────────────────────►│                    │
                          ▼  S210              ▼  S212
              ┌──────────────────┐  ┌──────────────────┐
              │select normal mode│  │ select idle mode │
              └──────────────────┘  └──────────────────┘
                          │                    │
                          ▼◄───────────────────┘
                  ╭─────────────────╮
                  │     return      │
                  ╰─────────────────╯
```

# Fig.6

# Fig.7

# Fig.8

```
        ┌─────────────────────────┐
        │   processing for        │
        │  setting the number     │
        │  of pilot injections    │
        └────────────┬────────────┘
                     │
        ┌────────────▼────────────┐
        │       read NE           │──S300
        └────────────┬────────────┘
                     │
        ┌────────────▼────────────┐
        │       read Q            │──S302
        └────────────┬────────────┘
                     │
        ┌────────────▼────────────┐
        │  number of pilot        │
        │  injections for         │
        │  determination Nx       │──S304
        │  ← MAPnr (NE, Q)        │
        └────────────┬────────────┘
                     │      S306
                 ◇───▼───◇          no
                < Nx≠2 ? >──────────────┐
                 ◇───┬───◇              │
                     │ yes              │  S310
                     │           no ◇───▼───◇
                     │◄────────────< Fs=ON ? >
                     │             ◇───┬───◇
                     │                 │ yes
          S308       │        S312     │
        ┌────────────▼──────┐   ┌──────▼────────────┐
        │ number of pilot   │   │ number of pilot   │
        │ injections ← Nx   │   │ injections ← 1    │
        └────────────┬──────┘   └──────┬────────────┘
                     │                 │
                     │◄────────────────┘
                ┌────▼────┐
                │ return  │
                └─────────┘
```

15

# Fig.9

```
          processing for
          setting a single
        pilot injection mode
                 │
                 ▼
         read THW          ~S400
                 │
                 ▼
         read ACCP         ~S401
                 │
                 ▼
                              S402
   no     ◇ ACCP=0%? ◇
  ◄───────────────────
                 │ yes
       ~S404     │
  Tx ← 1000 (℃)    Tx ← Min (THW, Tx)  ~S406
                 │
                 ▼
                         S408
         ◇ Tx < A (℃) ? ◇    no
                 │ yes    ────────►
                 ▼
              ~S410              ~S412
      Fs ← OFF          Fs ← ON
                 │
                 ▼
              return
```

**EP 1 933 021 A2**

**REFERENCES CITED IN THE DESCRIPTION**

**Patent documents cited in the description**

- JP 200352326 A
- JP 10274087 A
- JP 62017343 A
- WO 2000352326 A
- WO 6217343 A
- JP 2006144588 A
- WO 2006144588 A